# EUROPEAN PATENT APPLICATION

(11) **EP 3 239 905 A1**
(43) Date of publication of application: **01.11.2017**
(21) Application number: 16188780.7
(22) Date of filing: 14.09.2016
(51) Int. Cl.: G06N 3/08, G06Q 40/04

(54) **METHODS AND APPARATUS FOR USE IN PREDICTING NON-STATIONARY TIME-SERIES DATA**

(30) Priority: 29.04.2016 GB 201607565; 29.04.2016 DE 102016207467
(71) Applicant: FUJITSU LIMITED, 211-8588 Kanagawa (JP)
(72) Inventor: TOWNSEND, Joseph, High Wycombe, Buckinghamshire HP15 7AX (GB)
(74) Representative: Fenlon, Christine Lesley

(57) **Abstract**

A computer-implemented data prediction method repeatedly carries out a prediction cycle in which a neural network outputs a predicted value of non-stationary time-series data at a next time step following a current time step, where values of the time-series data are known for and up to the current time step. In each prediction cycle the inputs for a neural network are selected dynamically by performing at each time step an input selection process. The input selection process comprises determining, for a set of candidate indicators which may each correlate with the time-series data, the causality between values of the time-series data and values of each indicator of the set of candidate indicators using a predetermined causality measure (for example, Granger causality), and selecting a subset of indicators, from those of the candidate indicators which are calculated to yield at the current time step the highest causal correlation with the time-series data, to be the inputs for the neural network.

## Description

The present invention relates to methods and apparatus for use in predicting non-stationary time-series data.

Prediction of times-series data is relevant to many different fields, including for example (but not limited to) analysis of financial data and data collected from a range of different devices including wearables and smart devices. Time-series data is a sequence of data ordered by time of observation. The time difference between elements of the series is usually fixed. Often when predicting movements in time-series data, predictions are based on indicators, i.e. a value, or a time-series of values, that correlates (or appears to correlate) with the time-series data to be predicted to the extent that the indicator appears to provide predictive information about the time-series data to be predicted (the "target time-series data"). Stock price prediction, for example, has been attempted using a wide range of indicators. These may be primary indicators (price and trading volume), secondary indicators (calculations on primary indicators) or other key performance indicators (KPls) such as employability rates, exchange rates, or data from news or social media such as tweet count (i.e. number of related posts on Twitter™), sentiment values, etc. Usually in this case, the direction of stock price change (positive or negative) is predicted, rather than the price itself. The rate at which this direction of change is predicted correctly, in stock price or other prediction, is usually referred to as the 'hit-rate'.

Causality is the extent to which changes in one time-series data set affect changes in another, and therefore also the extent to which the former is useful in predicting the latter. In order to choose an indicator, data analysts may perform a "causality analysis", for example of the type known as a 'Granger causality analysis', to identify indicators which correlate with the time-series data to be predicted in such a way that changes in the former show evidence of causing changes in the latter.

Predicting trends in time-series data is particularly difficult when (like stock price, for example) the time-series data is non-stationary, i.e. when parameters such as the mean and standard deviation are not constant. In other words, time-series data is non-stationary when the pattern in the data keeps changing or when there is little or no clear pattern at all. Taking this into account, causality between an indicator and the target time-series data to be predicted may also not be constant, and therefore it may be that indicators which show the strongest correlation with the time-series data to be predicted may change depending on the time.

Returning to the stock prediction scenario, although a range of different indicators have been attempted, most hit-rates achieved tend to be between 50 to 65%, which shows little improvement over random guessing. Some hit rates of around 70-80% have been achieved, but such results have been demonstrated only for a limited time period and for particular stocks. Owing to the non-stationary nature of the data, it may be that results are not so promising for different time periods or different stocks.

One method of predicting time-series data based on indicator inputs is to use neural networks, taking past values of indicators as inputs and the value to be predicted as the output. A neural network is a layered network of artificial units which map an input vector (in the input layer) to an output vector (in the output layer) according to numerical weights on edges between units. Weights are adjusted according to a training algorithm, usually backpropagation. One type of neural network, with one or very few hidden layers, is a multi-layer perceptron (sometimes referred to as a 'shallow' neural network). Another type of neural network, with multiple layers, is a deep neural network. Neural network approaches to stock price prediction have generally yielded the hit-rates highlighted in the above paragraph.

It is desirable to provide a more suitable prediction system for use in predicting non-stationary time-series data.

According to an embodiment of a first aspect of the present invention there is provided a computer-implemented method of dynamically selecting, for successive time steps, inputs of a neural network for outputting a predicted value of non-stationary time-series data at a next time step following a current time step, where some or all values of the time-series data are known for and up to the current time step. The method comprises performing at each time step an input selection process, which input selection process comprises: for a set of candidate indicators which may each correlate with the time-series data, determining the causality between values of the time-series data and values of each indicator of the set of candidate indicators using a predetermined causality measure, and selecting a subset of indicators, from those of the candidate indicators which are calculated to yield at the current time step the highest causal correlation with the time-series data, to be the inputs for the neural network. The predetermined causality measure may for example be Granger causality, but could be any other suitable causality measure.

According to an embodiment of a second aspect of the present invention there is provided a computer-implemented data prediction method for repeatedly carrying out a prediction cycle in which a neural network outputs a predicted value of non-stationary time-series data at a next time step following a current time step, where values of the time-series data are known for and up to the current time step. In each prediction cycle the inputs for a neural network are selected in accordance with a method embodying the first aspect of the present invention.

In each prediction cycle of a method embodying the second aspect of the present invention, after the inputs for the neural network are selected, a determination may be made as to whether a suitable trained neural network with the same selected inputs and output is available for retrieval. If so, such a trained neural network from the most recent previous prediction cycle is retrieved for use in the current prediction cycle and is further trained on any past values of the data obtained for its input indicators which are new since the network was last retrieved. If not, a new neural network having the required inputs and output is constructed and trained on the basis of past values for the times-series data and the indicators in the subset of indicators.

Training the neural network may comprise transforming data for the past m time steps (where m is a positive integer) from the subset of indicators and the time-series data into a training set for the neural network. The training set may comprise n rows (where n is a positive integer), each row representing values of the indicators in the subset of indicators over a time window of one or more time steps and the value of the time-series data for the time step which follows that time window, where one row represents the most recent time window and other rows represent previous time windows, separated by one time step. Training the neural network may further comprise using a neural network learning algorithm to set weights for the neural network using the training set. The trained neural network may be stored after training for retrieval and use in a later prediction cycle.

In an embodiment of the invention the neural network may be used to predict the value of the time-series data at the next time step by inputting into the neural network values for each indicator in the subset of indicators over a plurality of past time windows, each time window comprising one or more time steps.

According to an embodiment of a third aspect of the present invention there is provided a computer program which, when run on a computer, causes that computer to carry out a method embodying the first and/or second aspect of the present invention.

According to an embodiment of a fourth aspect of the present invention there is provided an input selection device configured to dynamically select, for successive time steps, inputs of a neural network for outputting a predicted value of non-stationary time-series data at a next time step following a current time step, where some or all values of the time-series data are known for and up to the current time step. The device is operable to perform at each time step an input selection process, which input selection process comprises: for a set of candidate indicators which may each correlate with the time-series data, determining the causality between values of the time-series data and values of each indicator of the set of candidate indicators using a predetermined causality measure, and selecting a subset of indicators, from those of the candidate indicators which are calculated to yield at the current time step the highest causal correlation with the time-series data, to be the inputs for the neural network. The predetermined causality measure may for example be Granger causality, but could be any other suitable causality measure.

According to an embodiment of a fifth aspect of the present invention there is provided time-series data prediction apparatus configured to carry out repeatedly a prediction cycle in which a neural network outputs a predicted value of non-stationary time-series data at a next time step following a current time step, where values of the time-series data are known for and up to the current time step. The apparatus comprises an input selection device for selecting in each prediction cycle the inputs for a neural network, which device embodies the fourth aspect of the present invention.

Apparatus embodying the fifth aspect of the present invention may further comprise: a determination device operable in each prediction cycle, after the inputs for the neural network are selected by the input selection device, to determine whether a suitable trained neural network with the same selected inputs and output is available for retrieval, and a past neural network retrieval device operable, if the determination device determines that a suitable trained neural network is available for retrieval, to retrieve such a trained neural network from the most recent previous prediction cycle for use in the current prediction cycle. The apparatus also comprises a neural network construction device operable, if the determination device determines that a suitable trained neural network is not available for retrieval, to construct in the current prediction cycle a new neural network having the required inputs and output. A neural network training device is provided for training the network to be used in the current prediction cycle, where a retrieved neural network is trained on any past values of the data obtained for its input indicators which are new since the network was last retrieved, and a new neural network is trained on the basis of past values for the times-series data and the indicators in the subset of indicators.

The neural network training device may comprise: a training data preparation device operable to transform data for the past m time steps from the subset of indicators and the time-series data into a training set for the neural network, wherein the training set comprises n rows, each row representing values of the indicators in the subset of indicators over a time window of one or more time steps and the value of the time-series data for the time step which follows that time window, where one row represents the most recent time window and other rows represent previous time windows, separated by one time step. The training device may further comprise a weight setting device operable to use a neural network learning algorithm to set weights for the neural network using the training set. The apparatus is preferably operable to store the trained neural network after training.

The apparatus may be operable to use the neural network to predict the value of the time-series data at the next time step by inputting into the neural network values for each indicator in the subset of indicators over a plurality of past time windows, each time window comprising one or more time steps.

Embodiments of the present invention provide an improved approach to non-stationary time-series data prediction using neural networks in which the indicators upon which the predictions are based are switched depending on a re-evaluation of causality.

An embodiment of the invention can provide an approach to time-series data prediction using neural networks which is universal with respect to time and indicators, by providing a way of dynamically changing which indicators are used for prediction based on which indicators currently show the strongest causality with the time-series data to be predicted. As a result, the system will always predict based on the indicators which yield the strongest causality measure, and hit-rates will be higher (or at least more consistent) than those previously achieved, for example (but not exclusively) in the case of stock market prediction in which higher hit-rates are only presented for particular stocks, indicators and time periods.

Methods of identifying indicators using causality measures have been previously proposed, but a mechanism which uses them to dynamically instruct the choice of neural network based on network inputs has not. Dynamic neural networks, which change network topologies over time, have also been proposed, but do not change the overall model or the inputs received by the network. Furthermore, dynamic changes to the topologies are based on the behaviour of the network nodes and connections, not on Granger causality or any other form of correlation between the inputs or outputs.

In contrast, an embodiment of the present invention may be adaptable to different time periods during which different indicators may show a stronger causal relationship, by recalculating causality between each possible input and the target output at each point in time, and switching the network used to predict the output according to the set of input indicators with the highest causal relation.

Embodiments of the present invention maintain a balance between accuracy and computational efficiency. One might argue that instead of using a subset of indicators in a prediction model, the entire set of possible indicators could be used. However, this would increase the computational time of the algorithm, and the set of indicators used for prediction may be required to be limited to only a subset. However, if forced to use a subset of indicators, without re-evaluation of causality at each time step, a user might choose a subset of indicators which initially yield a high hit-rate but do not do so at a later time. The automatic re-evaluation of causality at each time step ensures that only the few indicators which yield the highest hit-rate are used at any one time.

Reference will now be made, by way of example, to the accompanying drawings, in which:
Figure 1 shows a flowchart illustrating a data prediction method embodying the present invention;
Figure 2 is a block diagram illustrating time-series data prediction apparatus embodying the present invention;
Figure 3 is a diagram for use in explaining a neural network input selection process embodying the present invention;
Figure 4 is a diagram for use in explaining how training data for a constructed neural network may be produced;
Figure 5 is a diagram for use in explaining how the constructed neural network may be trained;
Figure 6 is a diagram for use in explaining how a trained neural network may be used to predict time-series data;
Figure 7 is a diagram for use in explaining a specific example of a neural network input selection process embodying the present invention;
Figure 8 is a diagram for use in explaining a specific example of how training data for a constructed neural network may be produced;
Figure 9 is a diagram for use in explaining a specific example of how the constructed neural network may be trained;
Figure 10 is a diagram for use in explaining a specific example of how a trained neural network may be used to predict time-series data;
Figure 11 is a diagram for use in explaining a specific example of a neural network input selection process embodying the present invention in a cycle subsequent to that of Figure 7; and
Figure 12 is a block diagram of a computing device suitable for carrying out a method embodying the present invention.

A data prediction method embodying the present invention comprises repeatedly carrying out a prediction cycle in which a neural network outputs a predicted value of non-stationary time-series data at a next time step following a current time step, where values of the time-series data are known for and up to the current time step. In each prediction cycle the inputs for a neural network are selected dynamically by performing at each time step an input selection process. The input selection process preferably comprises determining, for a set of candidate indicators which may each correlate with the time-series data, the causality between values of the time-series data and values of each indicator of the set of candidate indicators using a predetermined causality measure (for example, Granger causality), and selecting a subset of indicators, from those of the candidate indicators which are calculated to yield at the current time step the highest causal correlation with the time-series data, to be the inputs for a neural network.

That is, in an embodiment of the present invention, at each time step t, given a time-series data set X to be predicted, and a set of candidate indicators I, a subset of indicators J currently shown to yield the highest causal correlation with X is selected for use in the prediction of the next value of X. The causality of each candidate indicator I for X can be measured using any causality measure, for example Granger causality analysis. At each t, a neural network model which takes J as its inputs and the next value of X as its output is constructed if it does not yet exist, or retrieved from memory if it does exist. The network is trained on past data for J and X, saved to memory, and the next value of X is predicted.

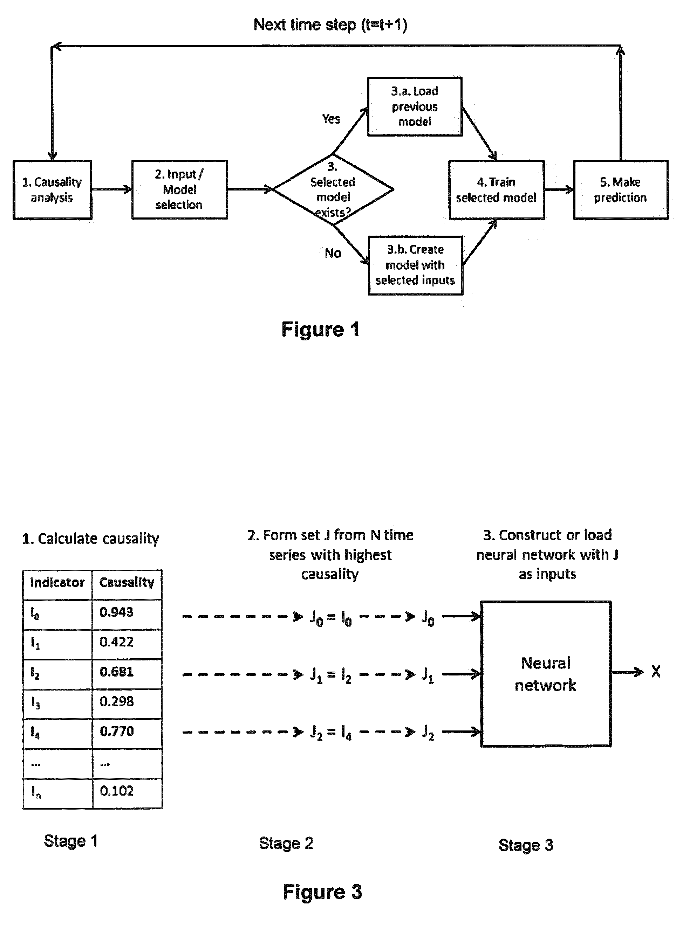

A method embodying the present invention will now be described in more detail with reference firstly to Figure 1. Figure 1 summarises the overall process for selecting J and predicting X in accordance with an embodiment of the present invention. In step 1 ("causality analysis"), at each time step t, the causality between each indicator (each member of I) and the target time-series data X is calculated. Any causality measure, for example Granger causality analysis, may be used. In step 2 ("input/model selection"), a fixed number (that is, a subset) J of indicators I are selected based on their measure of causality for the target time-series data X. In step 3 ("selected model exists?)" a determination is made as to whether or not a neural network of the appropriate model has already been created (for example, in a previous cycle). If the selected model, having the chosen set of inputs and outputs, does already exist in memory, the stored model is loaded in step 3a ("load previous model"). If not, in step 3b ("create model with selected inputs") a neural network which takes past values from each of the selected indicators as inputs, and the next value of the target time-series as its output, is constructed from scratch. In step 4 ("train selected model"), the loaded or constructed network is then trained on past data for the current indicators and target time-series data and saved to memory. Existing networks, after being retrieved from memory, are preferably trained further on any historical data obtained since those networks were last loaded, i.e. when the indicators they take as inputs were last selected as the predictive indicators. Networks are saved to memory again each time they are trained. In step 5 ("make prediction") the network is then used to predict the next value of the target time-series data. The whole process then moves to the next time step and repeats.

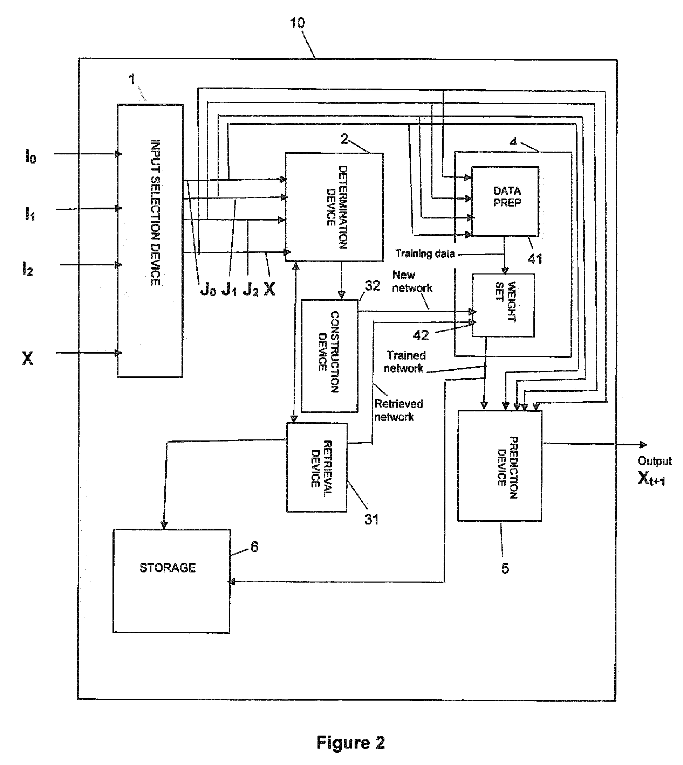

Time-series data prediction apparatus 10 suitable for carrying out the process illustrated in Figure 1 is shown in Figure 2. Apparatus 10 comprises an input selection device 1, a determination device 2, a past neural network retrieval device 31, a neural network construction device 32, a neural network training device 4, comprising a training data preparation device 41 and a weight setting device 42, a prediction device 5 and a past neural network storage 6.

The input selection device 1 is configured to dynamically select inputs of the neural network by performing at each time step an input selection process comprising, for a set of candidate indicators I₀, I₁, I₂, ..., In input into the device, which may each correlate with the time-series data X, determining the causality between values of the time-series data X and values of each indicator I₀, I₁, I₂, ..., In of the set of candidate indicators using a predetermined causality measure (for example Granger causality), and selecting a subset of indicators Jo, J₁, J₂, ... (three are shown), from those of the candidate indicators I₀, I₁, I₂, ..., In which are calculated to yield at the current time step the highest causal correlation with the time-series data X, to be the inputs for the neural network.

The determination device 2 is operable in each prediction cycle, after the inputs for the neural network are selected by the input selection device 1, to determine whether a suitable trained neural network with the same selected inputs, subset of indicators Jo, J₁, J₂, and output X is available for retrieval from storage 6. If the determination device 2 determines that a suitable trained neural network is available for retrieval from storage 6, the past neural network retrieval device 31 is operable to retrieve such a trained neural network from the most recent previous prediction cycle for use in the current prediction cycle. If the determination device 2 determines that a suitable trained neural network is not available for retrieval from storage 6, the neural network construction device 32 is operable to construct in the current prediction cycle a new neural network having the required inputs, subset of indicators Jo, J₁, J₂, and output X.

The neural network training device 4 is operable to train a new neural network, or further train a retrieved one, on the basis of past values for the times-series data X and the indicators Jo, J₁, J₂ in the subset of indicators. The neural network training device 4 comprises training data preparation device 41 which is operable to transform data for the past m time steps from the subset of indicators Jo, J₁, J₂ and the time-series data X into a training set for the new neural network. The training set comprises n rows, each row representing values of the indicators Jo, J₁, J₂ in the subset of indicators over a time window of one or more time steps and the value of the time-series data X for the time step which follows that time window, where one row represents the most recent time window and other rows represent previous time windows, separated by one time step. The neural network training device 4 also comprises weight setting device 42 which is operable to use a neural network learning algorithm to set weights for the neural network using the training set. After training the neural network is stored in storage 6.

Prediction device 5 then implements prediction of the value of the time-series data X at the next time step by inputting into the neural network (either the new trained neural network or the retrieved neural network following further training) values for each indicator Jo, J₁, J₂ in the subset of indicators over a plurality of past time windows, each time window comprising one or more time steps.

Figure 3 is a diagram for explaining the construction (or choice) of a neural network based on causality between indicators I and time-series data X to be predicted (steps 1 to 3(a and b) in Figure 1), where, at time t, a user wishes to predict the next value (at time t+1) for a given time-series data set X based on the previous s values of J, a subset of indicators I. It should be noted that I (and therefore J) may include X itself.

In stage 1 of Figure 3, the causality between each indicator (each member of I) and X is calculated (causality values are examples only). For each member of I, the calculated causality reflects the extent to which data from the past s time steps from that member of I is able to predict the next value of X. Causality may be calculated according to Granger causality, or any other measure of causality.

In stage 2 of Figure 3, those N time-series from I with highest causality for X are then selected as forecasters for X and stored as set J. In this example N=3, but can be any positive integer value greater than zero.

In stage 3 of Figure 3, the current configuration of J is used to construct a neural network which takes s values from each member of J as its inputs and outputs a value for X. Alternatively, if this configuration of J has been encountered in a previous cycle, the trained network from the most recent cycle for which this is true is retrieved from memory. If a new network in constructed, weights are initialised randomly. Otherwise, the retrieved network will retain the weights learned from its previous training cycle.

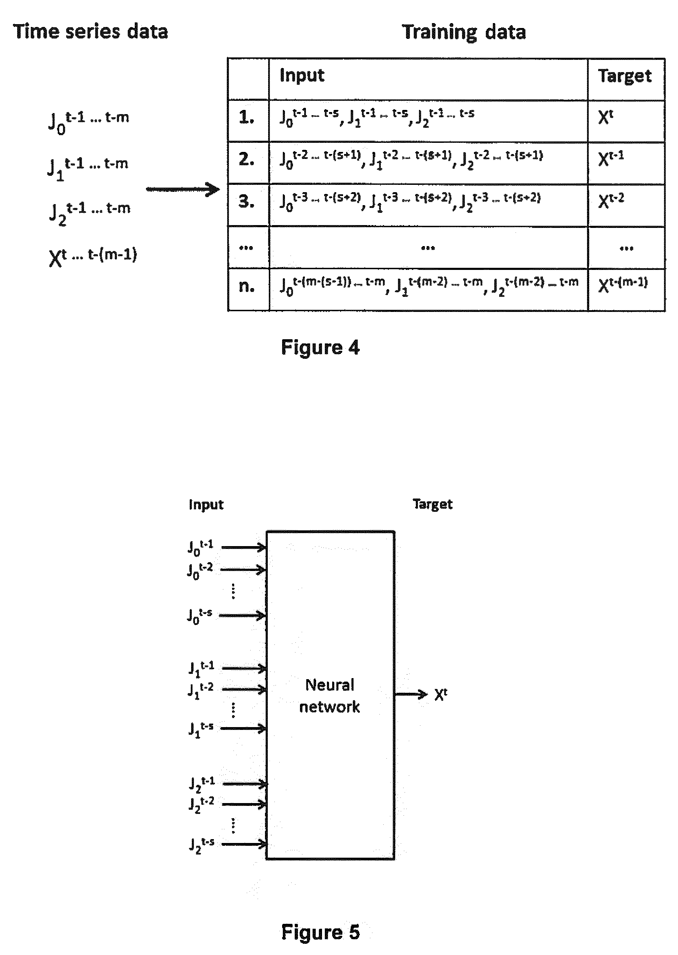

Figures 4 and 5 are diagrams for explaining step 4 of Figure 1, in which the neural network retrieved in stage 3a of Figure 1 or constructed in stage 3b of Figure 1 is trained.

Firstly, Figure 4 shows that data from both J and X for the past m time steps (shown on the lefthand side of Figure 4) is transformed into a training set (shown on the righthand side of Figure 4) for training the network. Each row contains a set of inputs and a target value which the network is expected to predict using the given inputs for that given time. That is, each row takes as its inputs s consecutive values of each member of J, and as its output the value of X which follows those s values. Each row 1 to n in the training set represents a different time window (of length s) from J and the value of X for the time step which follows that window, with the top row representing the most recent time window and the following rows representing previous time windows, moving backwards by one time step each row. This window is moved backwards through the time-series a time step at a time to produce each new row, with the most recent window in the first row.

Secondly, Figure 5 shows that the network is trained on the training data from Figure 4. By way of example, Figure 5 presents training using data from row 1 of Figure 4. The network is presented with each row from the training data and weights are adjusted according to backpropagation, or any other neural network training/learning algorithm.

The trained network is saved for possible future use, should the same set of indicators be selected for J in a later cycle.

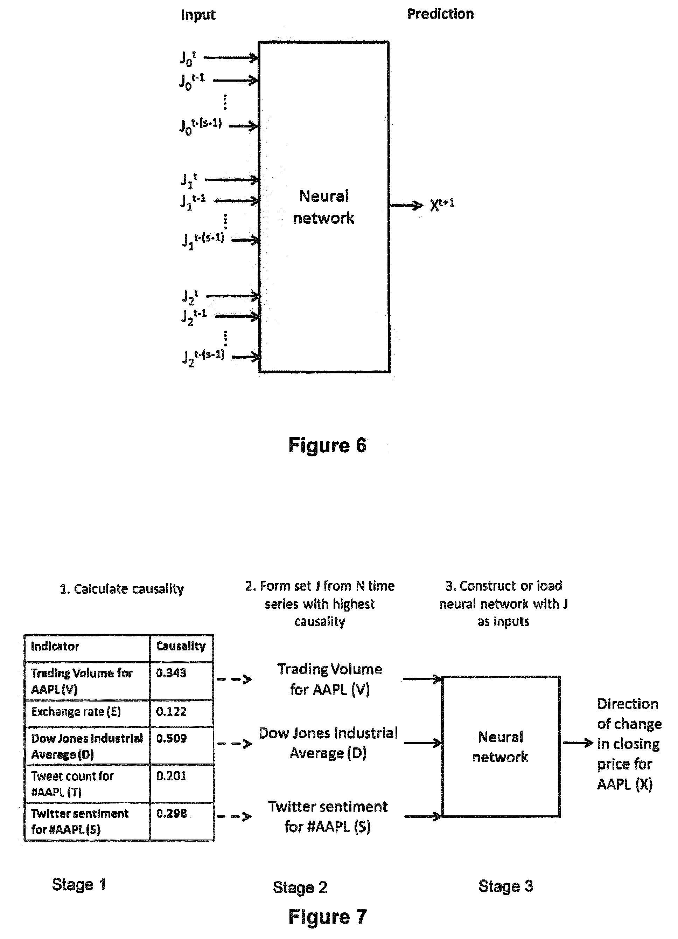

Figure 6 is a diagram for explaining step 5 of Figure 1, in which a prediction of the value for X at the next time step is made using the trained network. Values for each indicator in J over the past s time steps are presented as inputs, and the trained network outputs a prediction of X's value at the next time step. That is, to predict the next value of X at time t+1, values of each J in the range [t-(s-1), t] are input into the trained neural network, and the output predicts a value for Xₜ₊₁.

Further cycles of the process from step 1 of Figure 1 are carried out by incrementing t. Any new time-series data acquired at any time can be added to I and will be a candidate for indicator selection at the beginning of the next cycle.

An embodiment of the present invention, using as an example the problem of stock price prediction, will now be explained with reference to Figures 6 to 10. This embodiment provides an adaptive method that searches for indicators that correlate with a given stock price at a given point in time. In this example, a user wishes to predict the next-day direction of change of the closing price for Apple (for which the ticker symbol is 'AAPL'). Other time-series data (i.e. indicators) available to the user include the traded volume for AAPL, the exchange rate between pounds and dollars, the Dow Jones Industrial Average (DJIA), the number of tweets about that particular stock, and the sentiment of tweets about that stock (measured according to some sentiment analysis measure).

Figure 7 is a diagram for explaining the construction of a network for predicting the closing stock price X for Apple (AAPL) based on the causality between possible indicators I and that stock price (corresponding to steps 1 to 3(a and b) of Figure 1).

In stage 1 of Figure 7, the causality between each indicator and the closing price X is calculated (the causality values shown are examples only).

In stage 2 of Figure 7 network inputs are selected, by forming set J from the N indicators (in this example N =3, but this need not be case) with the highest causality for closing price X. In this case, trading volume, DJIA, and Twitter™ sentiment are found to be the N=3 time-series with the highest causality for closing price X and are therefore selected as forecasters for X and stored in set J.

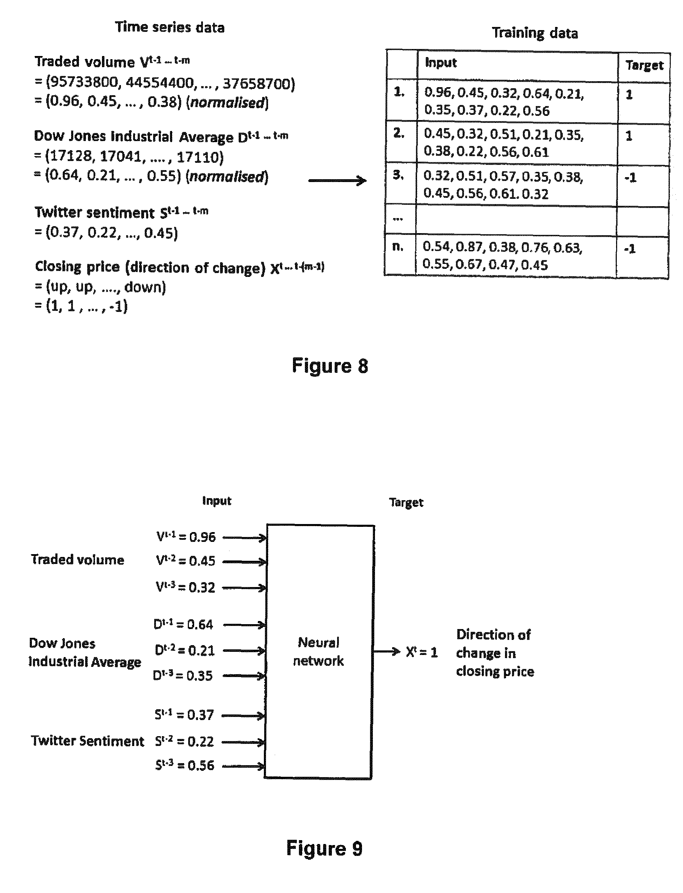

In stage 3 of Figure 7, assuming a network with the desired configuration does not already exist in memory, a neural network which takes this particular configuration of J for inputs is constructed. That is, the current configuration of J is used to construct a neural network which takes s values from each member of J as its inputs and the next predicted value of closing price X as its output, as shown in Figure 8.

Training of the network then takes place, as will now be explained with reference to Figures 8 and 9 (values for the time-series data and training data are examples only). In this example, firstly in Figure 8, data from both J and X for the past m days are normalised to a value between -1 and 1, and transformed into a set of training data. Each row in the training set represents a different time window of length s (s = 3 in this example) of data from J and X, with the top row representing the most recent time window and the following rows representing previous time windows, moving backwards by one day each row.

As shown in Figure 9, the network is then trained using the training data from Figure 8. That is, the network is presented with each row from the training data and weights are adjusted according to backpropagation, for example, or any other neural network learning algorithm.

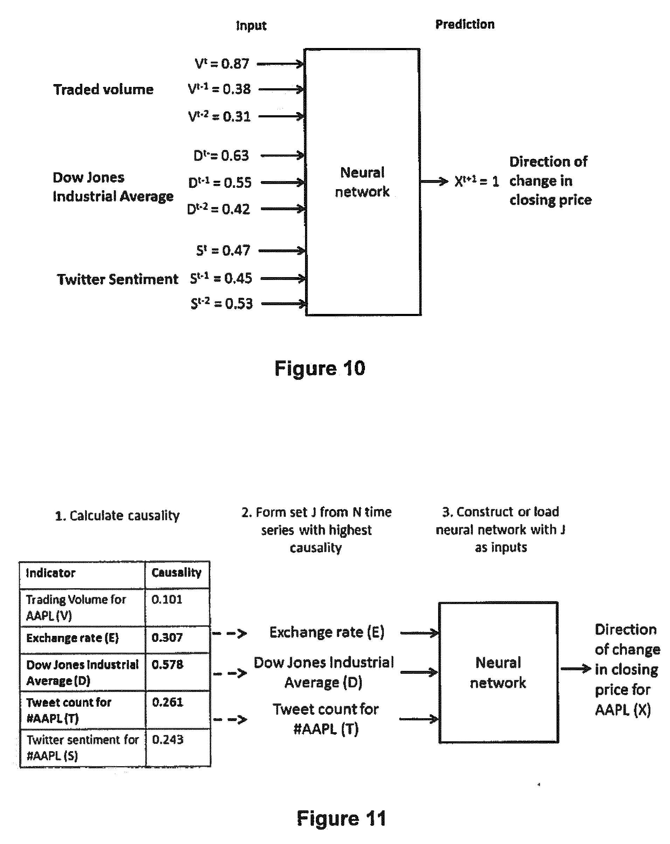

To predict the direction of change in closing price on the next day (time t+1), values of each indicator J over the past s days, i.e. in the range [t-2, t] ([t-(s-1), t]), are input into the trained neural network, and the output provides the prediction. As shown in the example of Figure 10, the network predicts that the direction of change in stock price for AAPL will be 1, i.e. a positive change in closing price is predicted.

The process described above with reference to Figures 7 to 10 is repeated each day. If at a later date different indicators from those identified in Figure 6 are found to yield the strongest correlation (causality) with the closing price, a different set J of indicators is generated for use in the process. For example, as shown in in Figure 11, the Dow Jones Industrial Average (DJIA) still yields the strongest correlation, but exchange rate and Tweet count yield the second and third strongest correlations, not trading volume and Twitter™ sentiment as in Figure 7, so the set of indicators in J is DJIA, exchange rate, and tweet count.

In general, embodiments of the present invention can be applied to any non-stationary time-series data prediction problem. For example, embodiments of the present invention could have financial applications other than stock price prediction, such as the prediction of exchange rates, bitcoin prices, sales figures, or the prediction of any KPI (key performance indicator) that is time-series based. Another possible application of the invention could be the prediction of social media trends, such as the number of posts on a certain topic, the number of users posting about that same topic, etc., if such time-series are non-stationary. However, these examples are not exhaustive. Embodiments of the present invention may be implemented in hardware, or as software modules running on one or more processors, or on a combination thereof. That is, those skilled in the art will appreciate that a microprocessor or digital signal processor (DSP) may be used in practice to implement some or all of the functionality described above.

The invention may also be embodied as one or more device or apparatus programs (e.g. computer programs and computer program products) for carrying out part or all of the methods described herein. Such programs embodying the present invention may be stored on computer-readable media, or could, for example, be in the form of one or more signals. Such signals may be data signals downloadable from an Internet website, or provided on a carrier signal, or in any other form.

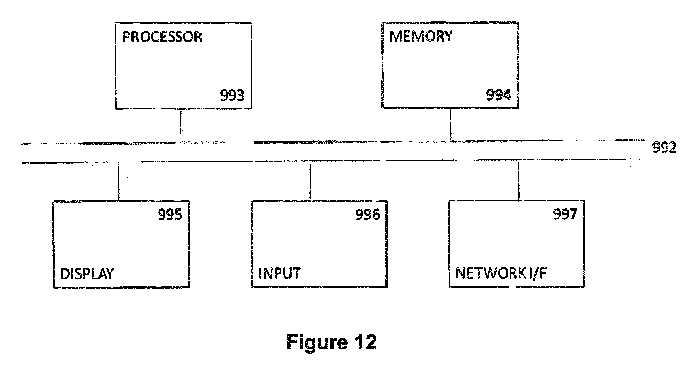

Figure 12 is a block diagram of a computing device, such as a data storage server, which embodies the present invention, and which may be used to implement some or all of the steps of a method embodying the present invention, and perform some or all of the tasks of apparatus of an embodiment. For example, the computing device of Figure 12 may be used to implement all the steps of the data prediction method illustrated in Figure 1 and perform all the tasks of the data prediction apparatus shown in Figure 2, or only to implement some of the steps in the method of Figure 1, and only to perform some of the tasks of the apparatus in Figure 2.

The computing device comprises a processor 993, and memory, 994. Optionally, the computing device also includes a network interface 997 for communication with other such computing devices, for example with other computing devices of invention embodiments.

For example, an embodiment may be composed of a network of such computing devices. Optionally, the computing device also includes one or more input mechanisms such as keyboard and mouse 996, and a display unit such as one or more monitors 995. The components are connectable to one another via a bus 992.

The memory 994 may include a computer readable medium, which term may refer to a single medium or multiple media (e.g., a centralized or distributed database and/or associated caches and servers) configured to carry computer-executable instructions or have data structures stored thereon. Computer-executable instructions may include, for example, instructions and data accessible by and causing a general purpose computer, special purpose computer, or special purpose processing device (e.g., one or more processors) to perform one or more functions or operations. Thus, the term "computer-readable storage medium" may also include any medium that is capable of storing, encoding or carrying a set of instructions for execution by the machine and that cause the machine to perform any one or more of the methods of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing computer program code stored in the memory 994 to implement the methods described with reference to Figures 1, 3, 4, 5 and/or 6 and defined in the claims. The memory 994 stores data being read and written by the processor 993. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and steps discussed herein.

The display unit 995 may display a representation of data stored by the computing device and may also display a cursor and dialog boxes and screens enabling interaction between a user and the programs and data stored on the computing device. The input mechanisms 996 may enable a user to input data and instructions to the computing device.

The network interface (network I/F) 997 may be connected to a network, such as the Internet, and is connectable to other such computing devices via the network. The network I/F 997 may control data input/output from/to other apparatus via the network. Other peripheral devices such as microphone, speakers, printer, power supply unit, fan, case, scanner, trackerball etc may be included in the computing device.

Methods embodying the present invention may be carried out on a computing device such as that illustrated in Figure 12. Such a computing device need not have every component illustrated in Figure 12, and may be composed of a subset of those components. A method embodying the present invention may be carried out by a single computing device in communication with one or more data storage servers via a network. The computing device may be a data storage itself storing at least a portion of the data.

A method embodying the present invention may be carried out by a plurality of computing devices operating in cooperation with one another. One or more of the plurality of computing devices may be a data storage server storing at least a portion of the data.

The above-described embodiments of the present invention may advantageously be used independently of any other of the embodiments or in any feasible combination with one or more others of the embodiments.

## Claims

1. A computer-implemented method of dynamically selecting, for successive time steps, inputs of a neural network for outputting a predicted value of non-stationary time-series data at a next time step following a current time step, where values of the time-series data are known for and up to the current time step, wherein the method comprises performing at each time step an input selection process, which input selection process comprises:
for a set of candidate indicators which may each correlate with the time-series data, determining the causality between values of the time-series data and values of each indicator of the set of candidate indicators using a predetermined causality measure, and
selecting a subset of indicators, from those of the candidate indicators which are calculated to yield at the current time step the highest causal correlation with the time-series data, to be the inputs for the neural network.

2. A method as claimed in claim 1, wherein the predetermined causality measure is Granger causality.

3. A computer-implemented data prediction method for repeatedly carrying out a prediction cycle in which a neural network outputs a predicted value of non-stationary time-series data at a next time step following a current time step, where values of the time-series data are known for and up to the current time step, wherein in each prediction cycle the inputs for a neural network are selected in accordance with the method of claim 1 or 2.

4. A method as claimed in claim 3, wherein in each prediction cycle, after the inputs for the neural network are selected:
a determination is made as to whether a suitable trained neural network with the same selected inputs and output is available for retrieval; and
if so, such a trained neural network from the most recent previous prediction cycle is retrieved for use in the current prediction cycle and is further trained on any past values of the data obtained for its input indicators which are new since the network was last retrieved; or
if not, a new neural network having the required inputs and output is constructed and trained on the basis of past values for the times-series data and the indicators in the subset of indicators.

5. A method as claimed in claim 4, wherein training the new neural network comprises:
transforming data for the past m time steps from the subset of indicators and the time-series data into a training set for the neural network, wherein the training set comprises n rows, each row representing values of the indicators in the subset of indicators over a time window of one or more time steps and the value of the time-series data for the time step which follows that time window, where one row represents the most recent time window and other rows represent previous time windows, separated by one time step; and
using a neural network learning algorithm to set weights for the neural network using the training set.

6. A method as claimed in claim 5, wherein the neural network is stored after training.

7. A method as claimed in any one of claims 3 to 6, wherein the neural network is used to predict the value of the time-series data at the next time step by inputting into the neural network values for each indicator in the subset of indicators over a plurality of past time windows, each time window comprising one or more time steps.

8. A computer program which, when run on a computer, causes that computer to carry out a method as claimed in claim 1 or 2, and/or a method as claimed in any of claims 3 to 7.

9. An input selection device configured to dynamically select, for successive time steps, inputs of a neural network for outputting a predicted value of non-stationary time-series data at a next time step following a current time step, where values of the time-series data are known for and up to the current time step, wherein the device is operable to perform at each time step an input selection process, which input selection process comprises:
for a set of candidate indicators which may each correlate with the time-series data, determining the causality between values of the time-series data and values of each indicator of the set of candidate indicators using a predetermined causality measure, and
selecting a subset of indicators, from those of the candidate indicators which are calculated to yield at the current time step the highest causal correlation with the time-series data, to be the inputs for the neural network.

10. A device as claimed in claim 9, wherein the predetermined causality measure is Granger causality.

11. Time-series data prediction apparatus configured to carry out repeatedly a prediction cycle in which a neural network outputs a predicted value of non-stationary time-series data at a next time step following a current time step, where values of the time-series data are known for and up to the current time step, wherein the apparatus comprises an input selection device as claimed in claim 9 or 10 for selecting in each prediction cycle the inputs for a neural network.

12. Apparatus as claimed in claim 11, further comprising:
a determination device operable in each prediction cycle, after the inputs for the neural network are selected by the input selection device, to determine whether a suitable trained neural network with the same selected inputs and output is available for retrieval;
a past neural network retrieval device operable, if the determination device determines that a suitable trained neural network is available for retrieval, to retrieve such a trained neural network from the most recent previous prediction cycle for use in the current prediction cycle;
a neural network construction device operable, if the determination device determines that a suitable trained neural network is not available for retrieval, to construct in the current prediction cycle a new neural network having the required inputs and output; and
a neural network training device operable to train the network to be used in the current prediction cycle, where a retrieved neural network is trained on any past values of the data obtained for its input indicators which are new since the network was last retrieved, and a new neural network is trained on the basis of past values for the times-series data and the indicators in the subset of indicators.

13. Apparatus as claimed in claim 12, wherein the neural network training device comprises:
a training data preparation device operable to transform data for the past m time steps from the subset of indicators and the time-series data into a training set for the neural network, wherein the training set comprises n rows, each row representing values of the indicators in the subset of indicators over a time window of one or more time steps and the value of the time-series data for the time step which follows that time window, where one row represents the most recent time window and other rows represent previous time windows, separated by one time step; and
a weight setting device operable to use a neural network learning algorithm to set weights for the neural network using the training set.

14. Apparatus as claimed in claim 13, wherein the apparatus is operable to store the neural network after training.

15. Apparatus as claimed in any one of claims 11 to 14, wherein the apparatus is operable to use the neural network to predict the value of the time-series data at the next time step by inputting into the neural network values for each indicator in the subset of indicators over a plurality of past time windows, each time window comprising one or more time steps.
